(19) **Europäisches Patentamt European Patent Office Office européen des brevets**

(11) **EP 3 601 005 B1**

(12) **FASCICULE DE BREVET EUROPEEN**

(45) Date de publication et mention de la délivrance du brevet:
**28.04.2021 Bulletin 2021/17**

(21) Numéro de dépôt: **18713331.9**

(22) Date de dépôt: **12.03.2018**

(51) Int Cl.:
*B60W 50/14* (2020.01)          *B62D 15/02* (2006.01)

(86) Numéro de dépôt international:
**PCT/FR2018/050572**

(87) Numéro de publication internationale:
**WO 2018/172648 (27.09.2018 Gazette 2018/39)**

(54) **PROCÉDÉ ET DISPOSITIF D'ASSISTANCE D'UN CONDUCTEUR DE VÉHICULE À CONDUITE AUTONOME, NOTAMMENT LORS D'UNE REPRISE DE CONTRÔLE MANUEL**

**VERFAHREN UND VORRICHTUNG ZUR ASSISTENZ EINES FAHRERS EINES SELBSTFAHRENDEN FAHRZEUGS, INSBESONDERE BEI EINER WIEDERÜBERNAHME DER MANUELLEN KONTROLLE**

**METHOD AND DEVICE FOR ASSISTING A DRIVER OF A SELF-DRIVING VEHICLE, IN PARTICULAR WHEN A MANUAL CONTROL IS RESUMED**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.03.2017 FR 1752279**

(43) Date de publication de la demande:
**05.02.2020 Bulletin 2020/06**

(73) Titulaires:
- **PSA Automobiles SA
  78300 Poissy (FR)**
- **Centre National de la Recherche Scientifique
  75016 Paris (FR)**
- **Institut Polytechnique de Bordeaux
  33402 Talence Cedex (FR)**
- **Université de Bordeaux
  33000 Bordeaux (FR)**

(72) Inventeurs:
- **ABRASHOV, Sergey
  91320 Wissous (FR)**
- **AIOUN, Francois
  91320 Wissous (FR)**
- **GUILLEMARD, Franck
  94370 Sucy En Brie (FR)**
- **MALTI, Rachid
  33100 Bordeaux (FR)**
- **MOREAU, Xavier
  33230 Saint Ciers D'abzac (FR)**

(56) Documents cités:
EP-A1- 2 618 108          EP-A2- 2 253 529
US-A1- 2009 204 326       US-A1- 2014 371 988

## Description

L'invention concerne les véhicules à conduite autonome, éventuellement de type automobile, et plus précisément les assistances qui sont destinées à aider les conducteurs de tels véhicules à conduire ces derniers.

On notera que l'on entend ici par « véhicule à conduite autonome », un véhicule pouvant être conduit de façon automatisée (et donc sans intervention de son conducteur) pendant une phase de conduite autonome ou de façon manuelle (et donc avec intervention de son conducteur sur le volant) pendant une phase de conduite manuelle.

Comme le sait l'homme de l'art, certains véhicules, généralement de type automobile, comprennent un dispositif d'assistance chargé de contrôler leur positionnement par rapport à la direction transversale à la route et de les conduire temporairement sans que leur conducteur n'agisse sur le volant ou sur une pédale.

Ce type de dispositif d'assistance assure le contrôle du véhicule en fonction, notamment, d'informations relatives à l'environnement extérieur du véhicule et fournies au moins par des moyens d'analyse de l'environnement extérieur embarqués. Pour ce faire, le dispositif d'assistance détermine en permanence la trajectoire optimale du véhicule dans le cadre d'une conduite automatisée, et, lors de chaque phase de conduite autonome, il contrôle l'angle du volant et la vitesse du véhicule pour que ce dernier suive au mieux la trajectoire optimale déterminée.

Il a été proposé, notamment dans le document brevet US 2014/371988, d'afficher la trajectoire optimale déterminée sur un écran du véhicule, afin que le conducteur de ce dernier soit, s'il le souhaite, informé de la meilleure trajectoire à suivre. Un tel affichage permet de rassurer le conducteur pendant une phase de conduite autonome, car elle lui prouve que le dispositif d'assistance assure sa tâche correctement. Cependant, il ne permet pas au conducteur, pendant une phase de conduite manuelle, de savoir si la trajectoire qu'il impose à son véhicule est similaire à la trajectoire optimale affichée.

Il a certes été également proposé dans le document brevet précité d'afficher, pendant une phase de conduite manuelle, la trajectoire effective en cours du véhicule en même temps que la trajectoire optimale. Mais, lors d'une reprise de contrôle du véhicule par son conducteur suite à une phase de conduite autonome, cet affichage simultané des trajectoires optimale et effective ne permet pas au conducteur de déterminer la part de son intervention manuelle (ou ce qui revient au même la part d'intervention du dispositif d'assistance) dans le contrôle effectif du véhicule. En d'autres termes, le conducteur ne sait pas du tout s'il contrôle tout seul son véhicule ou si le dispositif d'assistance participe au moins partiellement à ce contrôle. Cette situation peut s'avérer dangereuse, car le dispositif d'assistance peut avoir décidé de ne plus participer au contrôle du véhicule à un moment où le conducteur croit que c'est encore le cas et donc n'est pas totalement concentré sur la conduite manuelle.

L'invention a notamment pour but d'améliorer la situation.

Elle propose notamment à cet effet un procédé, d'une part, permettant d'assister un conducteur d'un véhicule propre à être conduit de façon automatisée et de façon manuelle, au moyen d'un volant, sur une voie de circulation, et, d'autre part, comprenant une étape dans laquelle on détermine une trajectoire optimale du véhicule en cas de conduite automatisée et une trajectoire effective en cours du véhicule sur la voie de circulation.

Ce procédé d'assistance se caractérise par le fait que dans son étape :

- on détermine également une valeur d'un paramètre représentatif d'une intervention manuelle en cours du conducteur sur le volant, et

- on matérialise sur un support les trajectoire optimale et trajectoire effective en cours déterminées avec un aspect qui est fonction de cette valeur du paramètre déterminée.

Grâce à ce double affichage de trajectoire selon un aspect qui dépend de l'intervention manuelle en cours du conducteur sur le volant, ce conducteur est désormais informé, lors d'une reprise de contrôle du véhicule, de la part de son intervention manuelle (ou ce qui revient au même la part d'intervention du dispositif d'assistance) dans le contrôle effectif du véhicule.

Le procédé d'assistance selon l'invention peut comporter d'autres caractéristiques qui peuvent être prises séparément ou en combinaison, et notamment :

- dans son étape, l'aspect peut être un niveau de transparence qui est fonction de la valeur du paramètre déterminée ;

  ➢ dans son étape, on peut utiliser un niveau de transparence maximal lorsque la valeur du paramètre déterminée représente exclusivement une intervention manuelle en cours du conducteur sur le volant sans conduite automatisée, et on peut utiliser un niveau de transparence minimal lorsque la valeur du paramètre déterminée représente exclusivement une conduite automatisée sans aucune intervention manuelle en cours du conducteur sur le volant ;

  • dans son étape, le niveau de transparence maximal peut correspondre à une invisibilité totale des trajectoire optimale et trajectoire effective en cours déterminées ;

- • en variante, dans son étape, lorsque la valeur du paramètre déterminée représente exclusivement une intervention manuelle en cours du conducteur sur le volant sans conduite automatisée, on peut faire croître progressivement le niveau de transparence d'une première valeur maximale, correspondant à une invisibilité partielle des trajectoire optimale et trajectoire effective en cours déterminées, jusqu'à une seconde valeur maximale, correspondant à une invisibilité totale des trajectoire optimale et trajectoire effective en cours déterminées ;

- dans son étape, lorsque le véhicule comprend une colonne de direction actionnable par le volant et par un moteur propre à produire un couple d'assistance, on peut déterminer un angle de référence imposé au volant pour que le véhicule suive la trajectoire optimale en fonction d'informations représentatives du véhicule et d'un environnement de ce dernier, puis on peut déterminer un couple d'assistance à produire en fonction d'un angle du volant en cours et de l'angle de référence déterminé, puis on peut déterminer la valeur du paramètre en fonction de ce couple d'assistance déterminé ;

  - ➢ dans son étape, plus le couple d'assistance déterminé est faible, plus la valeur du paramètre peut être représentative d'une intervention manuelle en cours élevée du conducteur sur le volant ;
- dans son étape, on peut matérialiser les trajectoire optimale et trajectoire effective en cours déterminées par affichage de lignes différentes sur un support qui est choisi parmi un écran d'affichage équipant le véhicule et un pare-brise du véhicule ;
- en variante, dans son étape, on peut matérialiser les trajectoire optimale et trajectoire effective en cours déterminées par projection de lignes différentes sur la voie de circulation qui constitue alors le support.

L'invention propose également un dispositif, d'une part, destiné à assister un conducteur d'un véhicule propre à être conduit de façon automatisée et de façon manuelle, au moyen d'un volant, sur une voie de circulation, et, d'autre part, comprenant des moyens de calcul propres à déterminer une trajectoire optimale du véhicule en cas de conduite automatisée et une trajectoire effective en cours du véhicule sur cette voie de circulation.

Ce dispositif d'assistance se caractérise par le fait que ses moyens de calcul sont également propres à déterminer une valeur d'un paramètre représentatif d'une intervention manuelle en cours du conducteur sur le volant, et à déclencher une matérialisation sur un support des trajectoire optimale et trajectoire effective en cours déterminées avec un aspect qui est fonction de cette valeur du paramètre déterminée.

L'invention est particulièrement bien adaptée, bien que non limitativement, au cas où le véhicule autonome ou partiellement autonome est de type automobile.

D'autres caractéristiques et avantages de l'invention apparaîtront à l'examen de la description détaillée ci-après, et des dessins annexés, sur lesquels :

- la figure 1 illustre schématiquement et fonctionnellement une route comportant trois voies de circulation sur l'une desquelles circule un exemple de véhicule à conduite autonome et comprenant des moyens d'analyse de l'environnement et un calculateur muni d'un exemple de réalisation d'un dispositif d'assistance selon l'invention,
- la figure 2 illustre schématiquement un exemple d'algorithme mettant en œuvre un procédé d'assistance selon l'invention, et
- la figure 3 illustre schématiquement un exemple d'image affichée sur l'écran du combiné central du véhicule de la figure 1 à un instant donné.

L'invention a notamment pour but de proposer un procédé d'assistance, et un dispositif d'assistance DA associé, destinés à assister un conducteur d'un véhicule VA à conduite autonome à conduire ce dernier (VA).

Il est rappelé que l'on entend ici par « véhicule à conduite autonome » un véhicule pouvant être conduit de façon automatisée (et donc sans intervention de son conducteur) pendant une phase de conduite autonome, sous le contrôle d'un dispositif d'assistance, ou de façon manuelle (et donc avec intervention de son conducteur sur le volant) pendant une phase de conduite manuelle.

Dans ce qui suit, on considère, à titre d'exemple non limitatif, que le véhicule VA est de type automobile. Il s'agit par exemple d'une voiture. Mais l'invention n'est pas limitée à ce type de véhicule. Elle concerne en effet tout type de véhicule à conduite autonome pouvant circuler sur des voies de circulation terrestres.

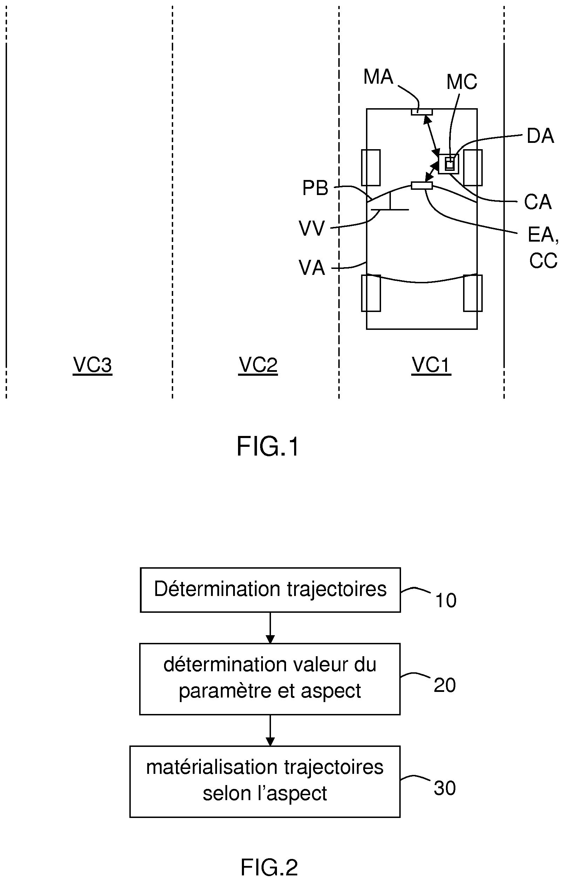

On a schématiquement et fonctionnellement représenté sur la figure 1 une route comportant trois voies de circulation VCj (j = 1 à 3) sur l'une desquelles circule un véhicule VA à conduite autonome. Ici le véhicule VA circule sur la première voie de circulation VC1.

Le véhicule VA étant à conduite autonome, il comprend notamment des moyens d'analyse de l'environnement MA et un dispositif d'assistance DA, selon l'invention, agissant sur son volant VV.

Bien que cela n'apparaisse pas sur la figure 1, le volant VV est solidarisé fixement à une colonne de direction, afin de permettre au conducteur de la contrôler. Cette colonne de direction est également contrôlable par un moteur électrique piloté par le dispositif d'assistance DA et faisant par exemple partie d'un dispositif de direction assistée.

Ce dispositif d'assistance DA est en effet chargé de contrôler le positionnement du véhicule VA par rapport à la direction transversale Y à la route et de le conduire sans que son conducteur n'agisse sur le volant ou sur une pédale. Ce contrôle est assuré par des moyens de contrôle MC en fonction, notamment, d'informations qui sont relatives à l'environnement extérieur du véhicule, fournies au moins par les moyens d'analyse de l'environnement extérieur MA embarqués. Il constitue, par exemple, ce que l'homme de l'art appelle un dispositif ADAS (« Advanced Driver Assistance System »)).

Le volant VV permet au conducteur du véhicule VA d'exercer sur la colonne de direction un couple Tc avec l'une au moins de ses mains.

On notera qu'un capteur est couplé à la colonne de direction afin de mesurer l'angle du volant $\theta_V$.

Le moteur électrique est chargé d'appliquer un couple d'assistance $T_A$ à la colonne de direction lorsqu'il en reçoit l'ordre du dispositif d'assistance DA. A cet effet, ce dernier (DA) peut déterminer un angle de référence $\theta_{ref}$ que devrait prendre le volant VV pour que le véhicule VA suive une trajectoire optimale TO, en fonction des informations représentatives du véhicule VA et de son environnement.

Les informations représentatives du véhicule VA peuvent, par exemple, être fournies par un calculateur embarqué dans le véhicule VA et chargé d'analyser sa dynamique. Par exemple, ces informations peuvent être représentatives de la position géographique en cours du véhicule VA et/ou de la vitesse en cours du véhicule VA et/ou de l'accélération en cours du véhicule VA.

Les informations représentatives de l'environnement du véhicule VA sont déterminées par les moyens d'analyse MA. On notera que ces derniers (MA) doivent ici déterminer au moins l'agencement de la voie de circulation VCj sur laquelle circule leur véhicule VA. Par conséquent, ils comprennent au moins une caméra, propre à acquérir des images numériques de l'environnement situé au moins devant le véhicule VA, et associée à un analyseur d'images numériques comprenant des moyens de reconnaissance de forme. Mais ils peuvent également comprendre des capteurs à ultrasons et/ou au moins un laser de balayage et/ou au moins un radar ou lidar, notamment pour la détection d'obstacles dans l'environnement du véhicule VA.

Le dispositif d'assistance DA peut, par exemple, déterminer le couple d'assistance $T_A$ que le moteur électrique doit produire, en fonction de l'angle du volant $\theta_V$ en cours (mesuré par le capteur couplé à la colonne de direction) et de l'angle de référence $\theta_{ref}$ (qu'il vient de déterminer). On comprendra que le couple d'assistance $T_A$ dépend du couple $T_C$ appliqué par le conducteur, et donc de l'angle du volant $\theta_V$.

Comme évoqué précédemment, l'invention propose un procédé d'assistance destiné, notamment, à assister le conducteur du véhicule VA à conduire ce dernier (VA).

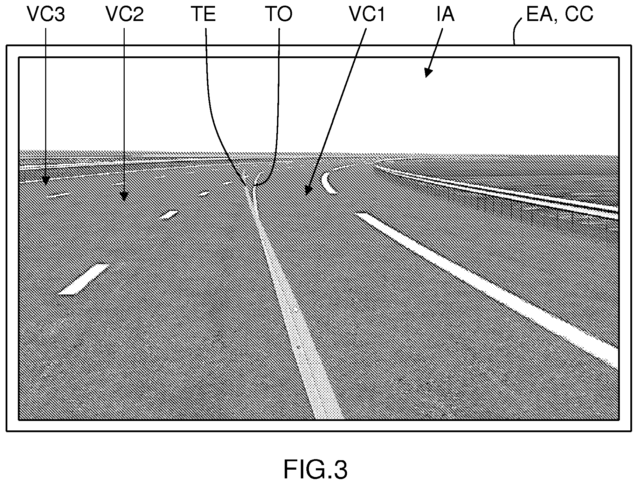

Un procédé d'assistance, selon l'invention, comprend une étape dans laquelle on commence tout d'abord à déterminer une trajectoire optimale TO du véhicule VA en cas de conduite automatisée (et donc sans intervention de son conducteur) et une trajectoire effective TE en cours du véhicule VA sur la voie de circulation VCj qu'il emprunte (voir figure 3).

Ces déterminations des trajectoire optimale TO et trajectoire effective TE sont réalisées par le dispositif d'assistance DA embarqué dans le véhicule VA, et plus précisément par des moyens de calcul MC que comprend ce dispositif d'assistance DA et qui sont agencés à cet effet.

Dans l'exemple non limitatif d'algorithme illustré sur la figure 2 et mettant en œuvre le procédé d'assistance selon l'invention, les déterminations des trajectoire optimale TO et trajectoire effective TE sont réalisées dans la sous-étape 10.

On notera que dans l'exemple illustré non limitativement sur la figure 1, le dispositif d'assistance DA est implanté dans un calculateur CA du véhicule VA qui peut éventuellement assurer au moins une autre fonction. Mais il pourrait comprendre un calculateur. Par conséquent, un dispositif d'assistance DA peut être réalisé sous la forme de modules logiciels (ou informatiques ou encore « software »), ou de circuits ou composants électriques ou électroniques (ou « hardware »), ou encore d'une combinaison de circuits ou composants électriques ou électroniques et de modules logiciels.

Toute technique connue de l'homme de l'art, permettant de déterminer la trajectoire optimale TO du véhicule VA et la trajectoire effective TE en cours (et donc réelle) du véhicule VA, peut être ici utilisée.

Par exemple, la trajectoire optimale TO peut être déterminée à partir de l'angle de référence $\theta_{ref}$ du volant VV, et la trajectoire effective TE peut être déterminée à partir de l'angle mesuré (et donc effectif) $\theta_V$ du volant VV.

Ces trajectoires TO et T2 sont déterminées par N positions futures $p_n$ (avec n = 1 à N) d'un point représentatif du véhicule VA, circulant à la vitesse v (par exemple considérée comme constante pour les N positions) et ayant un angle de volant $\theta_V$ (par exemple considéré comme constant pour les N positions). Chaque position future $p_n$, dans un plan XY et correspondant à un instant dt, est alors située à une distance n*dt*v/3,6 de la position en cours du point représentant le véhicule VA (si v est donnée en km/h). La direction X est la direction longitudinale de la route et la direction Y est la direction transversale de la route. On peut alors utiliser un modèle de véhicule VA de type bicyclette, défini par les équations suivantes :

$$\begin{cases} \dot{v}_y = \frac{C_f + C_r}{v_x M} v_y + \left( \frac{aC_f - bC_r}{v_x M} - v_x \right) \dot{\varphi} - \frac{C_f}{Mn} \theta_v \\ \ddot{\varphi} = \frac{aC_f - bC_r}{v_x I} v_y + \frac{a^2 C_f + b^2 C_r}{v_x I} \dot{\varphi} - \frac{aC_f}{In} \theta_v \\ \dot{x} = v_x \cos(\varphi) - v_y \sin(\varphi) \\ \dot{y} = v_x \sin(\varphi) + v_y \cos(\varphi) \end{cases} .$$

où $(x, y)$ sont les coordonnées globales du véhicule, $(a, b)$ sont les distances entre le centre de gravité du véhicule VA et respectivement les essieux avant et arrière, M est la masse du véhicule VA, $(C_f, C_r)$ sont les coefficients de liaison entre les pneumatiques et le sol, I est l'inertie du véhicule VA, n est le gain du braquage entre les roues du véhicule VA et le volant VV, $(v_x, v_y)$ sont les vitesses longitudinale et transversale dans un repère associé au véhicule VA, et $\varphi$ est un angle de lacet du véhicule VA.

Les paramètres du véhicule VA (a, b, M, Cf, $C_r$, I, n vx, vy, $\varphi$) sont supposés connus. Par ailleurs, on suppose qu'à l'instant donné t0, dans le repère fixé au centre de gravité du véhicule VA et ne se déplaçant pas avec le véhicule VA, l'angle de lacet $\varphi$ reste petit pendant la durée ts = N*dt et que les vitesses $v_y(t0)$ et $\varphi'(t0)$ sont nulles pour éviter l'impact des conditions initiales (il est cependant possible d'utiliser la valeur de $\varphi'(t0)$ mesurée par un capteur de vitesse de lacet embarqué pour améliorer la qualité de la prédiction de la trajectoire, surtout dans le cas d'un virage important). Dans ces conditions, le modèle de véhicule VA devient le modèle linéaire suivant :

$$\begin{bmatrix} \dot{v}_y \\ \ddot{\varphi} \\ \dot{\varphi} \\ \dot{y} \end{bmatrix} = \underbrace{\begin{bmatrix} \frac{C_f + C_r}{v_x M} & \left( \frac{aC_f - bC_r}{v_x M} - v_x \right) & 0 & 0 \\ \frac{aC_f - bC_r}{v_x I} & \frac{a^2 C_f + b^2 C_r}{v_x I} & 0 & 0 \\ 0 & 1 & 0 & 0 \\ 1 & 0 & v_x & 0 \end{bmatrix}}_{A} \underbrace{\begin{bmatrix} v_y \\ \dot{\varphi} \\ \varphi \\ y \end{bmatrix}}_{X} + \underbrace{\begin{bmatrix} -\frac{C_f}{Mn} \\ -\frac{aC_f}{In} \\ 0 \\ 0 \end{bmatrix}}_{B} \theta.$$

Si l'on suppose maintenant que la vitesse $v_x$ reste constante pendant N*dt, le dernier modèle de véhicule VA devient une représentation d'état linéaire de la forme sX = AX + B$\theta$; y = CX, où C = [0 0 0 1] et s est un opérateur de Laplace remplaçant la dérivation.

Cette représentation d'état est à « temps continue ». Par conséquent, pour obtenir la représentation d'état équivalente à « temps discret », on peut utiliser la transformation de Tustin : s = (2/dt)*[(1 - $z^{-1}$)/(1 + $z^{-1}$)], où $z^{-1}$ est l'opérateur retard. La représentation d'état discrète a alors la forme suivante :

$$X(k+1) = A_d X(k) + B_d \theta(k) ; y(k) = C_d X(k).$$

Les coordonnées des N positions futures $p_n$ de la trajectoire sont alors données par :

$$X_{ref} = \{x_1, x_2, x_3, \dots, x_N\}, \qquad Y_{ref} = \{y_1, y_2, y_3, \dots, y_N\},$$
$$x_i = i \times dt \times \frac{v_x}{3.6}, \qquad y_i = C_d \left( \sum_{j=0}^{i-1} A_d{}^j \right) B_d \theta.$$

Ici, on calcule les coordonnées des $p_n$ dans le repère qui correspond au repère du véhicule à l'instant t0. Mais il est possible que la matérialisation des trajectoires TO et TE nécessite des coordonnées globales. Ces dernières peuvent être déduites en effectuant le changement de base :

$$\begin{bmatrix} x' \\ y' \end{bmatrix} = \begin{bmatrix} \cos\phi & \sin\phi \\ -\sin\phi & \cos\phi \end{bmatrix} \begin{bmatrix} x - x_0 \\ y - y_0 \end{bmatrix},$$

où $\phi$ est l'angle de lacet dans un nouveau repère global et les coordonnées $(x_0, y_0)$ sont les coordonnées du centre de gravité du véhicule VA à l'instant t0 exprimées dans le nouveau repère global, et $(x', y')$ sont les nouvelles coordonnées d'une position $p_n$.

A titre d'exemple, le nombre N de positions $p_n$ contenues dans une trajectoire TO ou TE peut être compris entre trois et dix. Par exemple, N peut être égal à cinq.

Egalement à titre d'exemple, l'intervalle de temps dt peut être compris entre 0,2 s et 0,6 s. Par exemple, dt peut être égal à 0,4 s.

Dans l'étape du procédé, on (les moyens de calcul MC) détermine(nt), en complément des trajectoires optimale TO et effective TE, une valeur vp d'un paramètre qui est représentatif d'une intervention manuelle en cours du conducteur sur le volant VV. Cette détermination est réalisée dans la sous-étape 20 de l'algorithme de la figure 2.

Puis, on matérialise sur un support EA les trajectoire optimale TO et trajectoire effective TE en cours déterminées avec un aspect qui est fonction de la valeur du paramètre déterminée. Cette matérialisation est déclenchée par les moyens de calcul MC et réalisée dans la sous-étape 30 de l'algorithme de la figure 2.

On notera que la matérialisation des trajectoire optimale TO et trajectoire effective TE déterminées peut se faire de différentes façons.

Ainsi, elle peut se faire par affichage de lignes différentes sur un support EA qui est choisi parmi un écran d'affichage équipant le véhicule VA et un pare-brise du véhicule VA. Dans l'exemple illustré non limitativement sur les figures 1 et 3, la matérialisation se fait par affichage d'images IA sur un écran EA du combiné central CC implanté dans (ou sur) la planche de bord PB du véhicule VA. En variante ou en complément, elle pourrait se faire par affichage d'images IA sur un écran du tableau de bord du véhicule VA ou sur le pare-brise lorsque le véhicule VA dispose d'un dispositif d'affichage dit « tête haute ».

Dans une variante de réalisation non illustrée, la matérialisation des trajectoire optimale TO et trajectoire effective TE en cours déterminées peut se faire par projection de lignes différentes sur la voie de circulation VCj qui constitue alors le support EA. Cette projection peut se faire au moyen d'au moins un projecteur lumineux ou d'un dispositif optique (comme par exemple une grille laser), installé dans la partie avant du véhicule VA. Un tel projecteur lumineux peut, éventuellement, faire partie d'un bloc optique (phare ou feu avant) du véhicule VA.

Ce double affichage des trajectoire optimale TO et trajectoire effective TE selon un aspect qui dépend de l'intervention manuelle en cours du conducteur sur le volant VV, permet très avantageusement d'informer le conducteur, lors d'une reprise de contrôle du véhicule VA, non seulement de l'influence de son action manuelle sur la trajectoire effective TE, mais également de la part de son intervention manuelle (ou ce qui revient au même la part d'intervention du dispositif d'assistance DA) dans le contrôle effectif du véhicule VA.

Par conséquent, le conducteur sait s'il contrôle tout seul son véhicule VA ou si le dispositif d'assistance DA participe au moins partiellement à ce contrôle. Cela permet d'éviter au conducteur de se retrouver dans une situation dans laquelle le dispositif d'assistance DA a décidé de ne plus participer au contrôle du véhicule VA à un moment où il croit que c'est encore le cas, ou bien de ne pas contredire le dispositif d'assistance DA quand ce dernier (DA) n'a pas encore cessé de contrôler le véhicule VA mais que le conducteur a déjà mis ces mains sur le volant VV.

On notera que les déterminations et matérialisations peuvent être réalisées de façon périodique, par exemple toutes les demi-secondes ou secondes, au moins tant que la valeur du paramètre vp déterminée ne représente pas exclusivement une intervention manuelle en cours du conducteur sur le volant VV.

Par exemple, dans l'étape du procédé l'aspect des trajectoire optimale TO et trajectoire effective TE peut être un niveau de transparence qui est fonction de la valeur du paramètre vp déterminée (par les moyens de calcul MC).

Dans ce cas, dans l'étape du procédé, on (les moyens de calcul MC) peu(ven)t utiliser un niveau de transparence maximal lorsque la valeur du paramètre vp déterminée représente exclusivement une intervention manuelle en cours du conducteur sur le volant VV sans conduite automatisée, et on (les moyens de calcul MC) peu(ven)t utiliser un niveau de transparence minimal lorsque la valeur du paramètre vp déterminée représente exclusivement une conduite automatisée sans aucune intervention manuelle en cours du conducteur sur le volant VV.

On notera que ce niveau de transparence maximal peut, par exemple, correspondre à une invisibilité totale des trajectoire optimale TO et trajectoire effective TE en cours déterminées. Dans ce cas, lorsque la valeur du paramètre vp déterminée indique que seul le conducteur agit sur le volant VV, aucune des trajectoire optimale TO et trajectoire effective TE n'est matérialisée sur le support EA. Par exemple, ce niveau de transparence maximal peut être égal à une transparence de 100%. Egalement par exemple, le niveau de transparence minimal peut être égal à une transparence de 0%.

Dans une variante de réalisation, lorsque la valeur du paramètre vp déterminée représente exclusivement une intervention manuelle en cours du conducteur sur le volant VV sans conduite automatisée, on (les moyens de calcul MC) peu(ven)t faire croître progressivement le niveau de transparence d'une première valeur maximale, correspondant à une invisibilité partielle des trajectoire optimale TO et trajectoire effective TE en cours déterminées, jusqu'à une seconde valeur maximale, correspondant à une invisibilité totale des trajectoire optimale TO et trajectoire effective TE en cours déterminées. Dans ce cas, lorsque la valeur du paramètre vp déterminée indique que seul le conducteur agit sur le volant VV, on matérialise les trajectoire optimale TO et trajectoire effective TE sur le support EA selon la première valeur maximale du niveau de transparence, puis on augmente progressivement ce dernier jusqu'à ce que les trajectoire optimale TO et trajectoire effective TE ne soient plus du tout matérialisées sur le support EA. Par exemple, la première valeur maximale du niveau de transparence peut être égale à une transparence de 90%, et la seconde valeur maximale du niveau de transparence peut être égale à une transparence de 100%.

Par exemple, on peut utiliser une loi de croissance du niveau de transparence de type exponentiel.

Sur l'image IA de réalité augmentée, qui est affichée sur la figure 3 à titre d'exemple non limitatif, le conducteur peut observer, d'une part, que les trajectoire optimale TO et trajectoire effective TE sont quasiment identiques à très court terme, mais qu'elles diffèrent légèrement à moyen terme, et d'autre part, que le niveau de transparence est intermédiaire. Par conséquent, le conducteur peut en déduire instantanément, d'une part, que le dispositif d'assistance DA continue de contrôler partiellement la colonne de direction en même temps que lui, et, d'autre part, qu'il n'applique pas un couple suffisant sur le volant VD (et plus précisément qu'il ne braque pas suffisamment).

On notera que d'autres aspects que le niveau de transparence peuvent être utilisés pour représenter la part de l'intervention manuelle en cours du conducteur sur le volant VV. Ainsi, ou pourrait utiliser différents niveaux de gris (allant du noir au gris très clair, par exemple), ou différentes couleurs, ou différentes largeurs de trajectoire (allant d'une très large à une très fine, par exemple), ou encore des traits d'aspects différents (allant du continu au pointillés, ou du continu à des tirets de plus e plus espacés, par exemple). On peut également envisager de combiner au moins deux types d'aspects différents pour la matérialisation des trajectoires TO et TE en fonction de vp.

On notera également que toute technique, connue de l'homme de l'art et permettant de déterminer la valeur du paramètre vp qui représente l'intervention manuelle en cours du conducteur sur le volant VV (ou ce qui revient au même la part d'intervention du dispositif d'assistance DA), peut être utilisée par les moyens de calcul MC.

Ainsi, dans l'étape du procédé, lorsque, comme évoqué précédemment, le véhicule VA comprend une colonne de direction actionnable par le volant VV et par un moteur propre à produire un couple d'assistance $T_A$, on (les moyens de calcul MC) peu(ven)t commencer par déterminer l'angle de référence $\theta_{ref}$ imposé au volant VV pour que le véhicule VA suive la trajectoire optimale TO en fonction d'informations représentatives du véhicule VA et de son environnement. Puis, on (les moyens de calcul MC) peu(ven)t déterminer un couple d'assistance $T_A$ à produire en fonction de l'angle du volant en cours $\theta_V$ et de l'angle de référence $\theta_{ref}$ déterminé. Puis, on (les moyens de calcul MC) peu(ven)t déterminer la valeur du paramètre vp en fonction de ce couple d'assistance $T_A$ déterminé.

Dans ce cas, dans l'étape du procédé, plus le couple d'assistance TA déterminé est faible, plus la valeur du paramètre vp peut, par exemple, être représentative d'une intervention manuelle en cours élevée du conducteur sur le volant VV (ou ce qui revient au même d'une intervention faible du dispositif d'assistance AD).

Mais d'autres techniques peuvent être utilisées, et notamment des techniques utilisant les mesures effectuées par des capteurs capacitifs situés sur le volant VV, ou des techniques décrites dans les documents brevet FR 2016/52243 et FR 2016/52244.

On notera également que l'invention n'est pas seulement utile lors des reprises de contrôle du véhicule par le conducteur suite à une phase de conduite autonome. En effet, elle est également utile lors d'une phase de conduite autonome, car les trajectoire optimale TO et trajectoire effective TE sont matérialisées avec un aspect représentatif de cette autonomie totale et sont normalement quasiment superposées, permettant ainsi au conducteur de contrôler si l'action du dispositif d'assistance DA sur le véhicule VA est correcte. On pourrait également envisager que le conducteur choisisse un mode de fonctionnement dans lequel les trajectoire optimale TO et trajectoire effective TE sont de nouveau matérialisées quelques instants (par exemple cinq ou dix secondes) après qu'il ait effectivement et durablement repris totalement le contrôle du véhicule VA. Par exemple, le conducteur peut avoir la possibilité d'activer ou de désactiver le dispositif d'assistance DA à tout moment. Cette dernière option est destinée à permettre au conducteur de confronter la trajectoire effective TE qu'il imprime au véhicule VA à la trajectoire optimale TO qui est déterminée par le dispositif d'assistance DA.

## Revendications

**1.** Procédé d'assistance pour un conducteur d'un véhicule (VA) propre à être conduit de façon automatisée et de façon manuelle, au moyen d'un volant (VV), sur une voie de circulation (VCj), ledit procédé comprenant une étape dans laquelle on détermine une trajectoire optimale dudit véhicule (VA) en cas de conduite automatisée et une trajectoire effective en cours dudit véhicule (VA) sur ladite voie de circulation (VCj), **caractérisé en ce que** dans ladite étape on détermine également une valeur d'un paramètre représentatif d'une intervention manuelle en cours dudit conducteur sur ledit volant (VV), et on matérialise sur un support (EA) lesdites trajectoire optimale et trajectoire effective en cours déterminées avec un aspect fonction de ladite valeur du paramètre déterminée.

**2.** Procédé selon la revendication 1, **caractérisé en ce que** dans ladite étape ledit aspect est un niveau de transparence fonction de ladite valeur du paramètre déterminée.

3. Procédé selon la revendication 2, **caractérisé en ce que** dans ladite étape on utilise un niveau de transparence maximal lorsque ladite valeur du paramètre déterminée représente exclusivement une intervention manuelle en cours dudit conducteur sur ledit volant (VV) sans conduite automatisée, et on utilise un niveau de transparence minimal lorsque ladite valeur du paramètre déterminée représente exclusivement une conduite automatisée sans aucune intervention manuelle en cours dudit conducteur sur ledit volant (VV).

4. Procédé selon la revendication 3, **caractérisé en ce que** dans ladite étape ledit niveau de transparence maximal correspond à une invisibilité totale desdites trajectoire optimale et trajectoire effective en cours déterminées.

5. Procédé selon la revendication 3, **caractérisé en ce que** dans ladite étape lorsque ladite valeur du paramètre déterminée représente exclusivement une intervention manuelle en cours dudit conducteur sur ledit volant (VV) sans conduite automatisée, on fait croître progressivement ledit niveau de transparence d'une première valeur maximale, correspondant à une invisibilité partielle desdites trajectoire optimale et trajectoire effective en cours déterminées, jusqu'à une seconde valeur maximale, correspondant à une invisibilité totale desdites trajectoire optimale et trajectoire effective en cours déterminées.

6. Procédé selon l'une des revendications 1 à 5, **caractérisé en ce que** dans ladite étape, lorsque ledit véhicule (VA) comprend une colonne de direction actionnable par ledit volant (VV) et par un moteur propre à produire un couple d'assistance, on détermine un angle de référence imposé audit volant (VV) pour que ledit véhicule (VA) suive ladite trajectoire optimale en fonction d'informations représentatives dudit véhicule (VA) et d'un environnement de ce dernier (VA), puis on détermine un couple d'assistance à produire en fonction d'un angle du volant en cours et dudit angle de référence déterminé, puis on détermine ladite valeur du paramètre en fonction dudit couple d'assistance déterminé.

7. Procédé selon la revendication 6, **caractérisé en ce que** dans ladite étape, plus ledit couple d'assistance déterminé est faible, plus ladite valeur du paramètre est représentative d'une intervention manuelle en cours élevée dudit conducteur sur ledit volant (VV).

8. Procédé selon l'une des revendications 1 à 7, **caractérisé en ce que** dans ladite étape on matérialise lesdites trajectoire optimale et trajectoire effective en cours déterminées par affichage de lignes différentes sur un support (EA) choisi parmi un écran d'affichage équipant ledit véhicule (VA) et un pare-brise dudit véhicule (VA).

9. Procédé selon l'une des revendications 1 à 7, **caractérisé en ce que** dans ladite étape on matérialise lesdites trajectoire optimale et trajectoire effective en cours déterminées par projection de lignes différentes sur ladite voie de circulation (VCj) qui constitue alors ledit support (EA).

10. Dispositif (DA) pour assister un conducteur d'un véhicule (VA) propre à être conduit de façon automatisée et de façon manuelle, au moyen d'un volant (VV), sur une voie de circulation (VCj), ledit dispositif (DA) comprenant des moyens de calcul (MC) propres à déterminer une trajectoire optimale dudit véhicule (VA) en cas de conduite automatisée et une trajectoire effective en cours dudit véhicule (VA) sur ladite voie de circulation (VCj), **caractérisé en ce que** lesdits moyens de calcul (MC) sont également propres à déterminer une valeur d'un paramètre représentatif d'une intervention manuelle en cours dudit conducteur sur ledit volant (VV), et à déclencher une matérialisation sur un support (EA) desdites trajectoire optimale et trajectoire effective en cours déterminées avec un aspect fonction de ladite valeur du paramètre déterminée.

**Patentansprüche**

1. Verfahren zur Unterstützung eines Fahrers eines Fahrzeugs (VA), das geeignet ist, auf automatisierte Weise und manuell mittels eines Lenkrads (VV) auf einer Verkehrsspur (VCj) gefahren zu werden, wobei das Verfahren einen Schritt umfasst, bei dem eine optimale Trajektorie des Fahrzeugs (VA) im Falle des automatisierten Fahrens und eine tatsächliche aktuelle Trajektorie des Fahrzeugs (VA) auf der Verkehrsspur (VCj) bestimmt werden, **dadurch gekennzeichnet, dass** in diesem Schritt auch ein Wert eines Parameters bestimmt wird, der für einen laufenden manuellen Eingriff des Fahrers am Lenkrad (VV) repräsentativ ist, und dass die optimale Trajektorie und die laufende tatsächliche Trajektorie, die mit einem von dem Wert des bestimmten Parameters abhängigen Aspekt bestimmt werden, auf einem Träger (EA) materialisiert werden.

**2.** Verfahren nach Anspruch 1, **dadurch gekennzeichnet, dass** in diesem Schritt der Aspekt ein von dem Wert des bestimmten Parameters abhängiger Grad an Transparenz ist.

**3.** Verfahren nach Anspruch 2, **dadurch gekennzeichnet, dass** in diesem Schritt ein maximaler Transparenzgrad verwendet wird, wenn der ermittelte Wert des Parameters ausschließlich einen manuellen Eingriff des Fahrers am Lenkrad (VV) ohne automatisiertes Fahren darstellt, und ein minimaler Transparenzgrad verwendet wird, wenn der ermittelte Wert des Parameters ausschließlich automatisiertes Fahren ohne jeglichen manuellen Eingriff des Fahrers am Lenkrad (VV) darstellt.

**4.** Verfahren nach Anspruch 3, **dadurch gekennzeichnet, dass** in diesem Schritt der maximale Transparenzgrad einer völligen Unsichtbarkeit der ermittelten optimalen Trajektorie und der tatsächlichen aktuellen Trajektorie entspricht.

**5.** Verfahren nach Anspruch 3, **dadurch gekennzeichnet, dass** in dem Schritt, wenn der Wert des ermittelten Parameters ausschließlich einen manuellen Eingriff des Fahrers am Lenkrad (VV) ohne automatisiertes Fahren darstellt, der Transparenzgrad schrittweise von einem ersten Maximalwert, der einer teilweisen Unsichtbarkeit der ermittelten optimalen Trajektorie und der tatsächlichen Trajektorie im Verlauf entspricht, auf einen zweiten Maximalwert erhöht wird, der einer vollständigen Unsichtbarkeit der ermittelten optimalen Trajektorie und der tatsächlichen Trajektorie im Verlauf entspricht.

**6.** Verfahren nach einem der Ansprüche 1 bis 5, **dadurch gekennzeichnet, dass** in diesem Schritt, wenn das Fahrzeug (VA) eine Lenksäule aufweist, die durch das Lenkrad (VV) und durch einen Motor, der geeignet ist, ein Unterstützungsmoment zu erzeugen, betätigt werden kann, ein dem Lenkrad (VV) auferlegter Bezugswinkel, so dass das Fahrzeug (VA) der optimalen Trajektorie folgt, in Abhängigkeit von Informationen bestimmt wird, die für das Fahrzeug (VA) und eine Umgebung desselben (VA) repräsentativ sind, dann ein zu erzeugendes Unterstützungsmoment in Abhängigkeit von einem aktuellen Lenkradwinkel und dem bestimmten Bezugswinkel bestimmt wird, dann der Wert des Parameters in Abhängigkeit von dem bestimmten Unterstützungsmoment bestimmt wird.

**7.** Verfahren nach Anspruch 6, **dadurch gekennzeichnet, dass** in diesem Schritt das ermittelte Unterstützungsmoment umso niedriger ist, je mehr der Wert des Parameters für einen hohen aktuellen manuellen Eingriff des Fahrers am Lenkrad (VV) repräsentativ ist.

**8.** Verfahren nach einem der Ansprüche 1 bis 7, **dadurch gekennzeichnet, dass** in diesem Schritt die optimale Trajektorie und die aktuelle Trajektorie, die durch die Anzeige verschiedener Linien auf einem Träger (EA), der aus einem das Fahrzeug (VA) ausrüstenden Bildschirm und einer Windschutzscheibe des Fahrzeugs (VA) ausgewählt wird, bestimmt werden, materialisiert werden.

**9.** Verfahren nach einem der Ansprüche 1 bis 7, **dadurch gekennzeichnet, dass** in diesem Schritt die durch Projektion verschiedener Linien auf die Verkehrsspur (VCj) ermittelte optimale Trajektorie und die aktuelle effektive Trajektorie, die dann die Auflage (EA) bildet, materialisiert werden.

**10.** Vorrichtung (DA) zur Unterstützung eines Fahrers eines Fahrzeugs (VA), das geeignet ist, auf automatisierte Weise und manuell mittels eines Lenkrads (VV) auf einer Verkehrsspur (VCj) gefahren zu werden, wobei die Vorrichtung (DA) Berechnungsmittel (MC) umfasst, die geeignet sind, eine optimale Trajektorie des Fahrzeugs (VA) im Falle des automatisierten Fahrens und eine aktuelle Trajektorie des Fahrzeugs (VA) auf der Verkehrsspur (VCj) zu bestimmen, **dadurch gekennzeichnet, dass** die Berechnungsmittel (MC) auch geeignet sind, einen Wert eines Parameters zu bestimmen, der für einen laufenden manuellen Eingriff des Fahrers am Lenkrad (VV) repräsentativ ist, und eine Materialisierung auf einem Träger (EA) der optimalen Trajektorie und der laufenden tatsächlichen Trajektorie auszulösen, die mit einem Aspekt bestimmt wird, der eine Funktion des Wertes des bestimmten Parameters ist.

**Claims**

**1.** A method of assisting a driver of a vehicle (VA) adapted to be driven in an automated manner and manually, by means of a steering wheel (VV), on a traffic lane (VCj), said method comprising a step in which an optimal trajectory of said vehicle (VA) in the event of automated driving and an actual current trajectory of said vehicle (VA) on said traffic lane (VCj) are determined, **characterized in that** in said step a value of a parameter representative of a manual intervention in progress by said driver on said steering wheel (VV) is also determined, and said optimal trajectory and actual trajectory in progress determined with an aspect dependent on said value of the parameter determined is materialized on a support (EA).

2. Method according to claim 1, **characterized in that** in said step said aspect is a level of transparency depending on said value of the determined parameter.

3. Method according to claim 2, **characterized in that** in said step a maximum level of transparency is used when said value of the determined parameter exclusively represents a current manual intervention of said driver on said steering wheel (VV) without automated driving, and a minimum level of transparency is used when said value of the determined parameter exclusively represents automated driving without any current manual intervention of said driver on said steering wheel (VV).

4. Method according to claim 3, **characterized in that** in said step said maximum transparency level corresponds to a total invisibility of said determined optimal trajectory and actual current trajectory.

5. Method according to claim 3, **characterized in that** in said step when said value of the parameter determined exclusively represents a manual intervention in progress of said driver on said steering wheel (VV) without automated driving, said level of transparency is progressively increased from a first maximum value, corresponding to a partial invisibility of said determined optimal trajectory and actual trajectory in progress, to a second maximum value, corresponding to a total invisibility of said determined optimal trajectory and actual trajectory in progress.

6. Method according to one of claims 1 to 5, **characterized in that** in said step, when said vehicle (VA) comprises a steering column operable by said steering wheel (VV) and by an engine capable of producing an assistance torque, a reference angle imposed on said steering wheel (VV) is determined so that said vehicle (VA) follows said optimal trajectory as a function of information representative of said vehicle (VA) and of an environment of the latter (VA), then an assistance torque to be produced as a function of a current steering wheel angle and of said determined reference angle is determined, then said value of the parameter is determined as a function of said determined assistance torque.

7. A method according to claim 6, **characterized in that** in said step, the lower said determined assistance torque is, the more said parameter value is representative of a high current manual intervention of said driver on said steering wheel (VV).

8. A method according to one of claims 1 to 7, **characterized in that** in said step said optimal trajectory and actual trajectory in progress determined by displaying different lines on a support (EA) chosen from a display screen equipping said vehicle (VA) and a windscreen of said vehicle (VA) are materialized.

9. Method according to one of claims 1 to 7, **characterized in that** in said step said optimal trajectory and current effective trajectory determined by projection of different lines on said traffic lane (VCj) which then constitutes said support (EA) is materialized.

10. Device (DA) for assisting a driver of a vehicle (VA) suitable for being driven in an automated manner and manually, by means of a steering wheel (VV), on a traffic lane (VCj), said device (DA) comprising calculation means (MC) suitable for determining an optimal trajectory of said vehicle (VA) in the event of automated driving and an actual trajectory in progress of said vehicle (VA) on said traffic lane (VCj), **characterized in that** the said calculation means (MC) are also suitable for determining a value of a parameter representative of a manual intervention in progress by the said driver on the said steering wheel (VV), and for triggering a materialization on a support (EA) of the said optimal trajectory and actual trajectory in progress determined with an aspect dependent on the said value of the parameter determined.

MA   MC

DA

PB

VV

VA

CA

EA,
CC

VC3        VC2        VC1

FIG.1

Détermination trajectoires — 10

détermination valeur du
paramètre et aspect — 20

matérialisation trajectoires
selon l'aspect — 30

FIG.2

VC3   VC2   TE   TO   VC1   IA   EA, CC

FIG.3

**EP 3 601 005 B1**

## RÉFÉRENCES CITÉES DANS LA DESCRIPTION

**Documents brevets cités dans la description**

- US 2014371988 A
- FR 201652243
- FR 201652244